# EUROPEAN PATENT APPLICATION

(11) **EP 4 342 715 A1**
(43) Date of publication of application: **27.03.2024**
(21) Application number: 23197604.4
(22) Date of filing: 15.09.2023
(51) Int. Cl.: B60L 7/10, B60L 58/10, B60L 58/12

(54) **CONTROL UNIT, ENERGY MANAGEMENT SYSTEM AND METHOD THEREIN FOR OPTIMIZING REGENERATIVE POWER**

(30) Priority: 23.09.2022 SE 2251105
(71) Applicant: Volvo Truck Corporation, 405 08 Göteborg (SE)
(72) Inventor: BERNTSSON, Simon, 417 53 Göteborg (SE); ANDREASSON, Mattias, 412 60 Göteborg (SE); SVEDBOM, Clas, 423 38 Göteborg (SE)
(74) Representative: Valea AB

(57) **Abstract**

An energy management system EMS (120) comprising a control unit (121) for controlling charging of an energy storage system, ESS (110). The control unit (121) is configured to obtain, from the ESS (110), a parameter representing a charge ability (P/Ic) of the ESS (110) and a parameter representing an actual charging power (P/Ia) measured by the ESS (110); compare the actual charging power or current (P/Ia) with a current value of the charge ability (P/Ic); adjust the current value of charge ability (P/Ic) based on the comparing result; and provide the adjusted value of charge ability (P/Ic,adj) to a power-to-mechanical conversion unit (130) for generating one or more control signals (C21, C22) based on the adjusted value of charge ability (P/Ic,adj) for controlling charging power delivered by one or more electric machines (141, 142).

## Description

### TECHNICAL FIELD

The disclosure relates generally to optimize regenerative power. In particular aspects, the disclosure relates to energy management for vehicles.

The disclosure can be applied in any vehicles, such as cars, trucks, buses, and construction equipment. Although the disclosure will be described with respect to a particular vehicle, the disclosure is not restricted to any particular vehicle.

### BACKGROUND

Recently, battery-powered electric vehicles (BEVs) become a promising technology leading the way towards decarbonization of environment. Due to a dawdling social acceptance, BEV is expected to have a large market penetration in near future. The performance of BEV strongly relies on energy storage systems (ESS) selected, control strategies adopted and energy management (EM) techniques applied. BEV requires an energy management system (EMS). The main function of EMS is to uphold the energy flow from ESS to vehicle wheels depending on the requirement. Further, an efficient EMS can aid in extending the BEV drive range. Many EM techniques have been applied to BEVs to reduce peak battery current, optimize battery state of charge (SoC), and increase battery durability, thereby extending the drive range of a BEV.

Batteries or battery packs in BEVs are either on-board or off-board charged depending on type and availability. Depending on the electric machine or motor employed in a vehicle, there are usually two operating modes, propulsion mode and regenerative braking. During propulsion mode, the power is transferred to the electric machine from the battery and during regenerative braking, the power is transferred from the electric machine to the battery. Generally speaking, regeneration means that electric machines are used to regenerate power back and charge batteries.

When performing regeneration, if looking at the power reported from the electric machine to judge if it is regenerating power as per the charge limits set by the charge ability of a battery, it needs to include sensor marginals and eventual losses in the calculations, leading to an offset created. That offset may be as big as 10-20%. This will lead to energy waste. There is no discussion and solution in the existing EM techniques on this issue.

### SUMMARY

Therefore, there is a need to develop an improved method for controlling charging power delivered by an electric machine and charging of an energy storage system.

According to a first aspect of the disclosure, a method performed by a control unit comprised in an energy management system for controlling charging of an energy storage system, (ESS) is disclosed. The method comprising obtaining, from the ESS, a parameter representing a charge ability of the ESS and a parameter representing an actual charging power or current measured by the ESS; comparing the actual charging power with a current value of the charge ability; adjusting the current value of charge ability based on the comparing result; and providing the adjusted value of charge ability to a power-to-mechanical conversion unit for generating one or more control signals based on the adjusted value of charge ability for controlling charging power delivered by one or more electric machines.

According to a second aspect of the disclosure, an energy management system comprising a control unit for controlling charging of an energy storage system (ESS) is disclosed. The control unit is configured to obtain, from the ESS , a parameter representing a charge ability of the ESS and a parameter representing an actual charging power measured by the ESS; compare the actual charging power with a current value of the charge ability; adjust the current value of charge ability based on the comparing result; and provide the adjusted value of charge ability to a power-to-mechanical conversion unit for generating one or more control signals based on the adjusted value of charge ability for controlling charging power delivered by one or more electric machines.

According to a third aspect of the disclosure, there is provided a computer program product comprising program code for performing the method described above.

According to a fourth aspect of the disclosure, there is provided a non-transitory computer-readable storage medium comprising instructions, which when executed by a processor device, cause the processor device to perform the method described above.

Embodiments herein offer several advantages such as but not limited to:
Improving lifetime and State of Health (SoH) for the ESS, reducing battery degradation.

Improving energy usage and availability, and system efficiency.

Improving drive range extension.

Improving service braking usage by storing energy at the time of braking and enable smooth energy transfer.

Enabling long-term energy management and dynamic power regulation.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein computer readable media, and computer program products associated with the above discussed technical effects and corresponding advantages.

### BRIEF DESCRIPTION OF THE DRAWINGS

With reference to the appended drawings, below follows a more detailed description of aspects of the disclosure cited as examples.
**Fig. 1** is a schematic diagram showing charge ability, charge limit and an actual charging power versus state of charge;
**Fig. 2** is a schematic block diagram showing an example electric-mechanic system in which embodiments herein may be implemented;
**Fig. 3** is a flow chart showing a method for controlling charging of an energy storage system according to one example;
**Fig. 4** is a schematic block diagram showing an exemplary energy management system;
**Fig. 5** is a schematic diagram showing a vehicle in which embodiments herein may be implemented; and
**Fig. 6** is a schematic diagram of an exemplary computer system for implementing examples disclosed herein, according to one example.

### DETAILED DESCRIPTION

Aspects set forth below represent the necessary information to enable those skilled in the art to practice the disclosure.

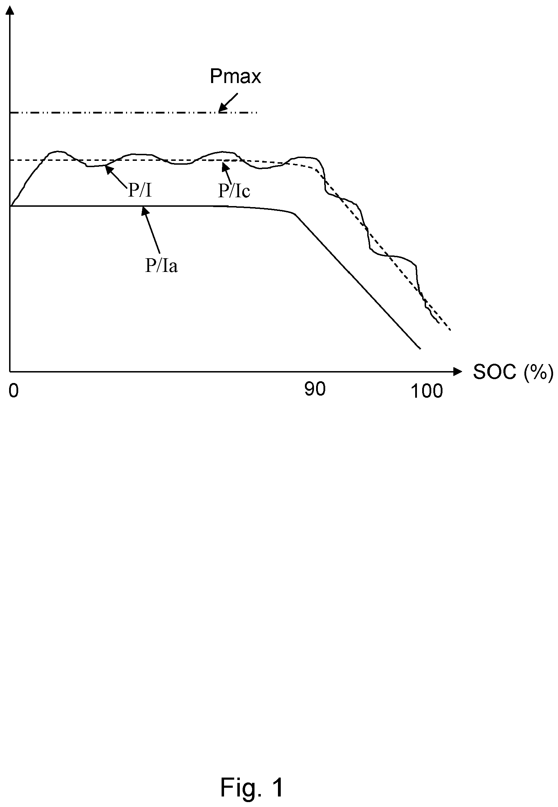

**Fig. 1** is a schematic diagram showing a charge ability of a battery, a charge limit of a battery, and an actual charging power received versus the state of charge (SoC) of a battery. The SOC is the level of charge of an electric battery relative to its capacity.

The charge ability of a battery is a parameter to describe how much power the battery will accept to charge at a moment. The charge ability may be represented by power or current and is illustrated in Fig.1 by the dotted curve indicated with **P/Ic.** The charge ability of a battery may be affected by time, temperature, state-of-charge, charging voltage or battery history. The charge limit of a battery is a parameter describing the maximum over charging power that the battery can accept, which is illustrated in Fig.1 by the dotted line indicated with **Pmax.** The charge limit Pmax is an ability with a short horizon sent to the electric machine or motor for ultimate ESS protection since the electric machine or motor has a faster control loop. The actual charging power is the charging power received and measured by the battery, which is illustrated in Fig. 1 by the solid curve indicated with **P/Ia.** As can be seen, the actual charging power received by the battery is lower than the charge ability of the battery. This is due to sensor marginals and eventual losses are included in the calculations, leading to an offset created. That offset may be as big as 10-20%.

According to embodiments herein, the goal of controlling charging of a battery is to make the actual charging power received matches or follows the charge ability of the battery during regeneration period, that is to make P/Ia=P/Ic over the time during the regeneration period. This is achieved by controlling the charging power or current delivered by the electric machine such that the actual charging power or current received by the battery matches or follows the change of the charge ability of the battery over time. This is illustrated in Fig. 1 by the solid curve indicated with P/I. On the other hand, the charging power or current delivered by the electric machine should also be controlled such that the actual charging power or current received by the battery should not over the charge limit Pmax.

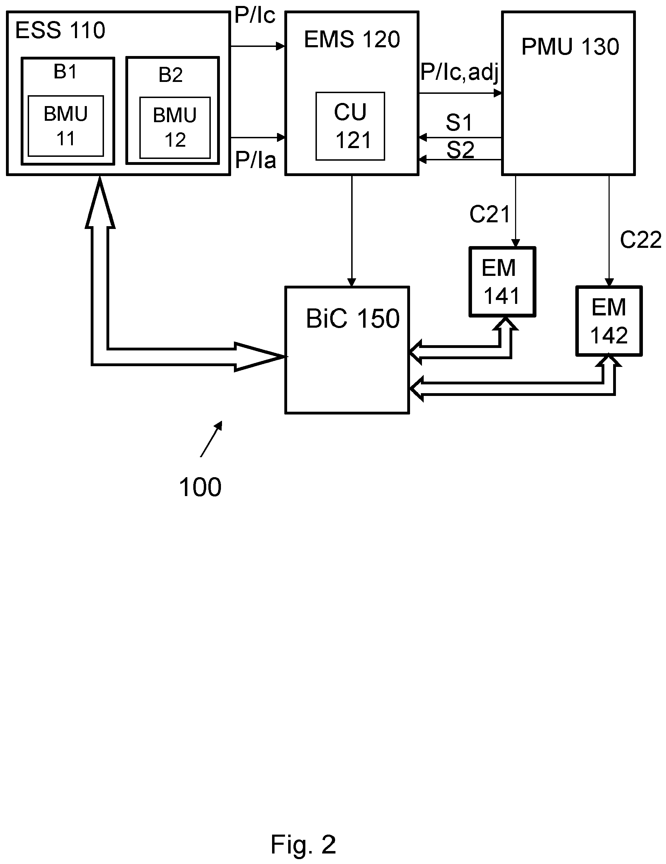

**Fig. 2** is a schematic layout of an example electric-mechanic system **100** comprised in a vehicle in which embodiments herein for controlling charging of one or more batteries may be implemented. The electric-mechanic system 100 comprises an energy storage system **ESS 110** comprising one or more batteries or battery packs **B1, B2.** For examples, in a truck there usually have 2-10 pcs batteries. Each battery has individual charge ability, and each battery has individual battery monitor unit (BMU), where a first **BMU 11** and a second **BMU 12** are shown.

The electric-mechanic system 100 further comprises an energy management system **EMS 120** for controlling the energy or power flow of the ESS 110 and optimizing battery state of charge, battery durability etc. The EMS 120 monitors continuously the battery status, generates control commands to other units for suitable control action, and sustain battery charge for longer distance. Further, the EMS 120 also manages the power distribution from the batteries to various components such as auxiliary power supplies, air conditioning, etc.

The electric-mechanic system 100 further comprises a power-to-mechanical conversion unit **PMU 130** which acts as an interface and is responsible for vehicle propulsion, energy recovery during regenerative braking, distributing power and generating control signals to electric machines or motors. The power-to-mechanical conversion unit PMU 130 may also send signals **S1** to the control unit CU 121.

The electric-mechanic system 100 further comprises one or more electric machines or motors **EM 141, EM 142.** Each electric machine or motor may have individual control unit and is configured to receive control signals **C21, C22** from the PMU 130.

The electric-mechanic system 100 may comprise other units or models, e.g. a Bidirectional converter **BiC 150** to facilitate reverse power flow, DC-DC converters (Not shown) to convert battery voltage to required high-voltage DC for propelling the motor drive etc.

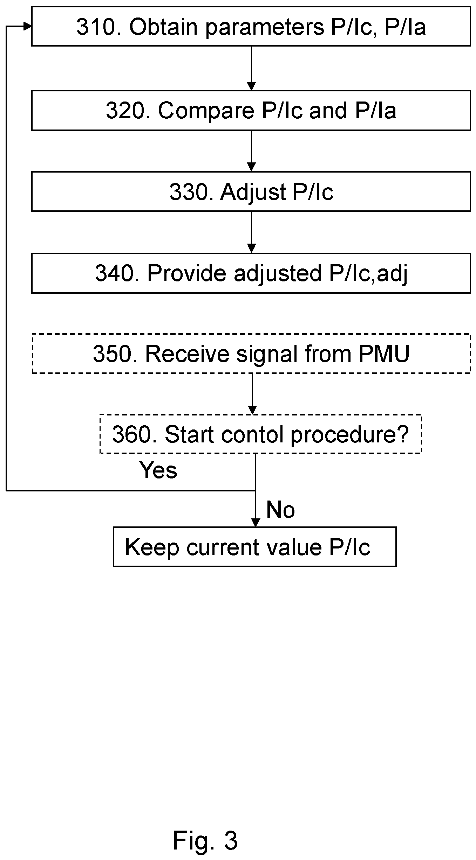

The method for controlling charging of the energy management system EMS 120 is performed by a control unit **CU 121** comprised in the energy management system EMS 120. The method will be described with reference to **Fig. 3****.** The method is applicable for a single battery pack or multiple battery packs. The method comprises the following actions.

### Action 310

The control unit CU 121 obtains from the ESS 110, a parameter representing a charge ability **P/Ic** of the ESS 110 and a parameter representing an actual charging power **P/Ia** received and measured by the ESS 110. The actual charging power P/Ia may be delivered by one or more electric machines EM 141, 142.

As described above, each battery has individual charge ability. The control unit 121 may receive several charge ability parameters from the batteries and calculate a total charge ability for the ESS 110. Therefore, the parameter representing a charge ability **P/Ic** of the ESS 110 may be the charge ability P/Ic of a single battery or the total charge ability of all batteries comprised in the ESS 110.

### Action 320

The control unit CU 121 compares the actual charging power P/Ia with a current value of the charge ability P/Ic. The current value of the charge ability P/Ic may be a current value of the charge ability of a single battery pack or a current total value of the charge ability for all batteries comprised in the ESS 110.

### Action 330

The control unit CU 121 adjusts the current value of charge ability P/Ic based on the comparing result. The current value of the charge ability P/Ic for a single battery pack or the current total value of the charge ability for all batteries in the ESS 110 may be adjusted.

For example, the current value of charge ability P/Ic may be adjusted by increasing the value of charge ability P/Ic if the actual charging power P/Ia is smaller than the current value of charge ability P/Ic and decreasing the value of charge ability P/Ic if the actual charging power P/Ia is larger than the current value of charge ability (P/Ic).

### Action 340

The control unit CU 121 provides the adjusted value of charge ability P/Ic,adj to the power-to-mechanical conversion unit 130 to generate one or more second control signals **C21, C22** based on the adjusted value of charge ability P/Ic,adj for controlling the charging power delivered by the one or more EM 141, 142.

The adjusted value of charge ability P/Ic,adj may be the adjusted charge ability of a single battery pack or the adjusted total charge ability for all batteries comprised in the ESS 110.

The one or more control signals C21, C22 are generated based on the adjusted value of charge ability P/Ic,adj for controlling the charging power delivered by one or more electric machines 141, 142 such that the charging power is increased if the charging power delivered by one or more electric machines is smaller than the adjusted value of charge ability P/Ic; or the charging power is decreased if the charging power delivered by one or more electric machines 141, 142 is larger than the adjusted value of charge ability P/Ic.

That is, with the control unit CU 121, the charging power is increased if the charging power reported by the electric machines are lower than what is reported back and measured by the batteries.

To achieve the goal of making Pa=Pc over the time during the regeneration period, i.e. to make the actual charging power received match the charge ability of the battery during regeneration period, the control unit CU 121 may use any algorithm follows the general regulator principle.

By using the difference between the actual charging power/current and the charge capability left in the charge abilities, it is possible that when it is close to the limits of the charging abilities, to still accurately, using the control unit 121 to control the regenerative power delivered by the electric machines such that the actual charging power/current does follow the charge limits, using all the charge abilities.

The reason for using the control unit 121 is that the electric machines have a request in torque and the conversion between electric power limits and mechanical power limits are prone to errors. To account for the errors, when not using the control unit 121, there will always be a margin so that the power used for charging is often significantly lower than the charge abilities.

According to some embodiments herein, there may be feedback from the power-to-mechanical conversion unit PMU 130 to the control unit CU 121 to optimize the regulator operation of the control unit CU 121. For example, a signal **S1** may be sent from the power-to-mechanical conversion unit PMU 130 to enable the control unit CU 121 to know in which situations to actually start this control functionality, or when to disregard this control functionality. For example, during a gear shifting, another charge ability is used, therefore the control unit CU 121 shall disregard what happens during that time. For example, the control unit CU 121 may not need to adjust the current value of charge ability P/Ic, i.e. the value of charge ability P/Ic is kept as it is, or the control functionality of the control unit CU 121 is disabled. For example, another signal **S2** may be sent from the power-to-mechanical conversion unit PMU 130 to the EMS 120 to tell the EMS 120 that it is sending out what it thinks is the max ability, so that the EMS knows that and the control unit CU 121 should start the regulation procedure.

Therefore, according to some embodiments herein, the method may further comprise the following actions.

### Action 350

The control unit CU 121 receives a signal S1, S2 from the power-to-mechanical conversion unit PMU 130.

### Action 360

The control unit CU 121 determines whether to start the control procedure or not based on the received signal S1, S2.

If it is determined that the control process should be started, the control unit CU 121 performs the Actions 310-340 as described above.

If it is determined that the control process should not be started, the control unit CU 121 will not adjust the current value of charge ability P/Ic. The value of charge ability P/Ic is kept as it is.

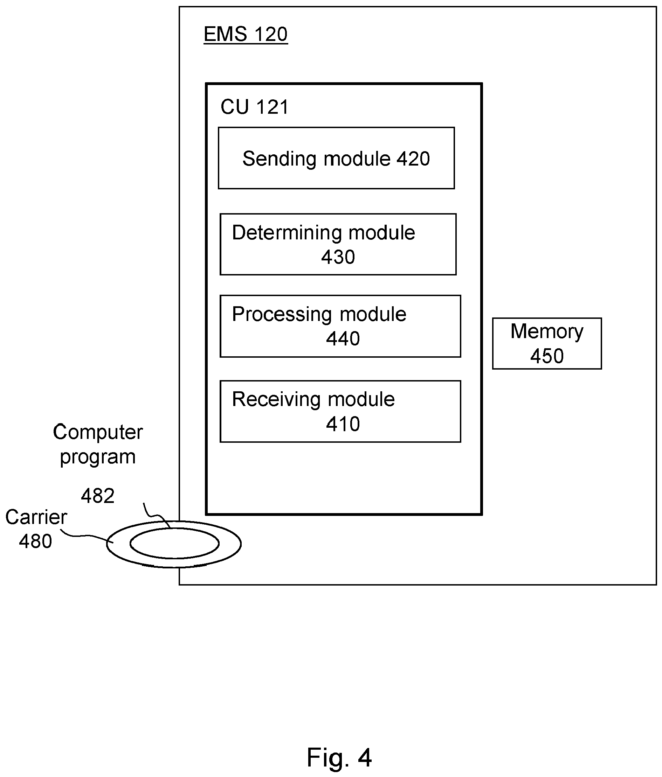

To perform the method for controlling charging of an energy storage system, the energy management system EMS 120 may comprise modules or units as shown in **Fig. 4****.** The energy management system EMS 120 comprises a control unit 121 which may comprise a **receiving module 410, a sending module 420, a determining module 430, a processing module 440** etc. The energy management system EMS 120 may comprise other units or modules, e.g. a **memory 450.**

The energy management system EMS 120 helps utilize the available energy resources. It receives various sensory inputs, internal system and driver commands to calculate the required power demand. Upon which appropriate control signals to PMU 130 initiates for smooth energy transfer from the battery to wheels and vice-versa. The EMS 120 not only interpret and record the data, but also observes the data from sensor inputs and tries to improve the drive range by applying appropriate control algorithms.

The energy management system EMS 120/the control unit 121 is configured to obtain, from the ESS 110, a parameter representing a charge ability P/Ic of the ESS 110 and a parameter representing an actual charging power P/Ia measured by the ESS (110); compare the actual charging power P/Ia with a current value of the charge ability P/Ic; adjust the current value of charge ability P/Ic based on the comparing result; and provide the adjusted value of charge ability P/Ic,adj to a power-to-mechanical conversion unit 130 for generating one or more control signals C21, C22 based on the adjusted value of charge ability P/Ic,adj for controlling charging power delivered by one or more electric machines 141, 142.

Those skilled in the art will appreciate that the receiving module 410, the sending module 420, the determining module 430 and the processing module 440 described above may be referred to one circuit or unit, a combination of analog and digital circuits, one or more processors, configured with software and/or firmware and/or any other digital hardware performing the function of each circuit/unit. One or more of these processors, the combination of analog and digital circuits as well as the other digital hardware, may be included in a single application-specific integrated circuitry (ASIC), or several processors and various analog/digital hardware may be distributed among several separate components, whether individually packaged or assembled into a system-on-a-chip.

The method according to embodiments herein may be implemented through one or more processors together with computer program code for performing the functions and actions of the embodiments herein. The program code mentioned above may also be provided as a computer program product, for instance in the form of a data carrier **480** carrying computer program code **482,** as shown in Fig. 4, for performing the embodiments herein when being loaded into the EMS 120. One such carrier is shown as the form of a CD ROM disc. It is however feasible with other data carriers such as a memory stick, a non-transitory computer-readable storage medium etc. The computer program code may furthermore be provided as pure program code on a server or cloud and downloaded to the EMS 120.

The memory 450 in the EMS 120 may comprise one or more memory units and may be arranged to be used to store received information, measurements, data, configurations and applications to perform the method herein when being executed in the EMS 120.

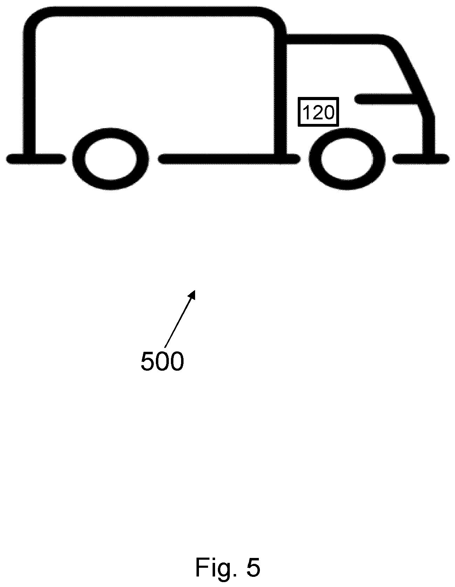

Fig. 5 is a schematic diagram showing a vehicle **500** in which embodiments herein may be implemented. The vehicle 500 comprises the energy management system EMS 120 as described above. The vehicle 500 may comprises a processor device to perform the method for controlling charging of an energy storage system as described above.

The embodiments herein can be applied in any type of vehicles such as wagons, motor vehicles e.g. motorcycles, cars, trucks, buses, railed vehicles e.g. trains, trams, watercraft e.g. ships, boats, amphibious vehicles e.g. screw-propelled vehicle, hovercraft, aircraft e.g. airplanes, helicopters, aerostat and spacecraft etc.

The method described above for controlling charging of an energy storage system may be implemented in a computer system.

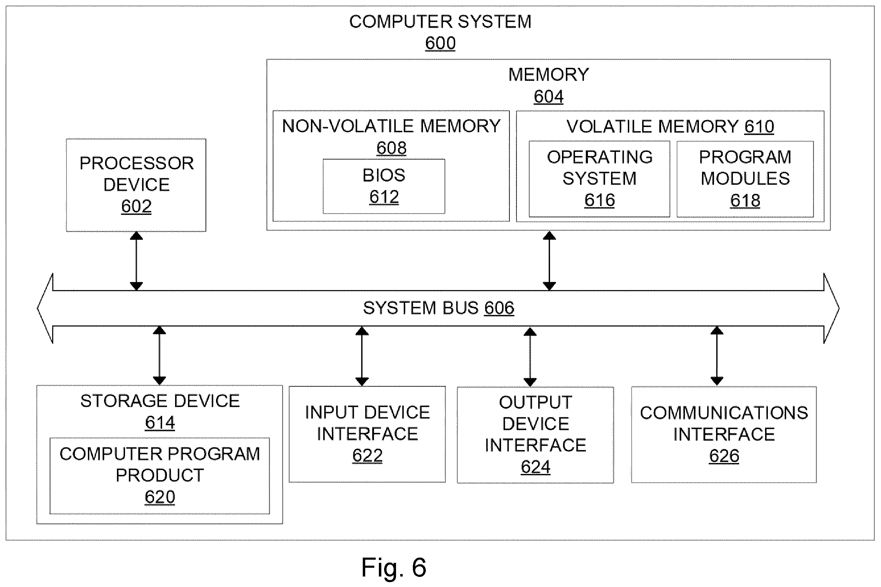

**Fig. 6** is a schematic diagram of a computer system **600** for implementing examples disclosed herein. The computer system 600 is adapted to execute instructions from a computer-readable medium to perform these and/or any of the functions or processing described herein. The computer system 600 may be connected (e.g., networked) to other machines in a LAN, an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise a computing device or electronic device capable of including firmware, hardware, and/or executing software instructions to implement the functionality described herein. The computer system 600 includes a processor device **602** (may also be referred to as a control unit), a memory **604,** and a system bus **606.** The system bus 606 provides an interface for system components including, but not limited to, the memory 604 and the processor device 602. The processor device 602 may include any number of hardware components for conducting data or signal processing or for executing computer code stored in memory 604. The processor device 602 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processor device 602 (e.g., via a circuit or any other wired, wireless, or network connection) and may include computer code for executing one or more processes described herein. The memory 604 may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with a processor device 602. A basic input/output system (BIOS) **612** may be stored in the non-volatile memory 608 and can include the basic routines that help to transfer information between elements within the computing device 600.

The computing device 600 may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 614 and/or in the volatile memory 610, which may include an operating system **616** and/or one or more program modules **618.** All or a portion of the examples disclosed herein may be implemented as a computer program product **620** stored on a transitory or non-transitory computer-usable or computer-readable storage medium (e.g., single medium or multiple media), such as the storage device 614, which includes complex programming instructions (e.g., complex computer-readable program code) to cause the processor device 602 to carry out the steps described herein. Thus, the computer-readable program code can comprise software instructions for implementing the functionality of the examples described herein when executed by the processor device 602. The processor device 602 may serve as a controller, or control system, for the computing device 600 that is to implement the functionality described herein.

The computer system 600 also may include an input device interface **622** (e.g., input device interface and/or output device interface). The input device interface 622 may be configured to receive input and selections to be communicated to the computer system 600 when executing instructions, such as from a keyboard, mouse, touch-sensitive surface, etc. Such input devices may be connected to the processor device 602 through the input device interface 622 coupled to the system bus 606 but can be connected through other interfaces such as a parallel port, an Institute of Electrical and Electronic Engineers (IEEE) 1394 serial port, a Universal Serial Bus (USB) port, an IR interface, and the like. The computer system 600 may include an output device interface **624** configured to forward output, such as to a display, a video display unit (e.g., a liquid crystal display (LCD) or a cathode ray tube (CRT)). The computing device 600 may also include a communications interface **626** suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A method performed by a control unit, CU (121) comprised in an energy management system, EMS (120) for controlling charging of an energy storage system, ESS (110), the method comprising:
obtaining (310), from the ESS (110), a parameter representing a charge ability (P/Ic) of the ESS (110) and a parameter representing an actual charging power or current (P/Ia) measured by the ESS (110);
comparing (320) the actual charging power or current (P/Ia) with a current value of the charge ability (P/Ic);
adjusting (330) the current value of charge ability (P/Ic) based on the comparing result; and
providing (340) the adjusted value of charge ability (P/Ic,adj) to a power-to-mechanical conversion unit (130) for generating one or more control signals (C21, C22) based on the adjusted value of charge ability (P/Ic,adj) for controlling charging power delivered by one or more electric machines (141, 142) comprised in a vehicle (500).

2. The method of claim 1, wherein the method for controlling charging of an energy storage system, ESS (110) is performed during a regeneration period of the vehicle (500).

3. The method according to any one of claims 1-2, wherein adjusting (330) the current value of charge ability (P/Ic) based on the comparing result comprises:
increasing the value of charge ability (P/Ic) if the actual charging power or current (P/Ia) is smaller than the current value of charge ability (P/Ic);
decreasing the value of charge ability (P/Ic) if the actual charging power or current (P/Ia) is larger than the current value of charge ability (P/Ic).

4. The method according to any one of claims 1-3, wherein one or more control signals (C21, C22) are generated based on the adjusted value of charge ability (P/Ic,adj) for controlling the charging power delivered by one or more electric machines (141, 142) comprised in the vehicle (500) such that:
the charging power is increased if the charging power delivered by the one or more electric machines (141, 142) is smaller than the adjusted value of charge ability (P/Ic); or
the charging power is decreased if the charging power delivered by the one or more electric machines (141, 142) is larger than the adjusted value of charge ability (P/Ic).

5. The method according to any one of claims 1-4, further comprises:
receiving (350) a signal (S1, S2) from the power-to-mechanical conversion unit PMU (130);
determining (360) whether to start the control procedure or not based on the received signal (S1, S2).

6. An energy management system, EMS (120) comprising a control unit (121) for controlling charging of an energy storage system, ESS (110), wherein the control unit (121) is configured to:
obtain, from the ESS (110), a parameter representing a charge ability (P/Ic) of the ESS (110) and a parameter representing an actual charging power or current (P/Ia) measured by the ESS (110);
compare the actual charging power or current (P/Ia) with a current value of the charge ability (P/Ic);
adjust the current value of charge ability (P/Ic) based on the comparing result; and
provide the adjusted value of charge ability (P/Ic,adj) to a power-to-mechanical conversion unit (130) for generating one or more control signals (C21, C22) based on the adjusted value of charge ability (P/Ic,adj) for controlling charging power delivered by one or more electric machines (141, 142) comprised in a vehicle (500).

7. The energy management system, EMS (120) according to claim 6, wherein the control unit (121) is configured to control charging of the energy storage system, ESS (110) during a regeneration period of the vehicle (500).

8. A vehicle (500) comprising an energy management system, EMS (120) according to any one of claims 6-7.

9. A vehicle (500) comprising a processor device configured to perform the method of any of claims 1-5.

10. A computer program product comprising program code for performing, when executed by a processor device comprised in a control unit, CU (121), of an energy management system, EMS (120), the method of any of claims 1-5.

11. A non-transitory computer-readable storage medium (614) comprising instructions, which when executed by a processor device (602) comprised in a control unit, CU (121), of an energy management system, EMS (120), cause the processor device (602) to perform the method of any of claims 1-5.
